(19) Europäisches Patentamt

European Patent Office

Office européen des brevets

(11) Publication number: 0 524 002 B1

(12) EUROPEAN PATENT SPECIFICATION

(45) Date of publication of patent specification: 27.12.95 (51) Int. Cl.⁶: **B60C 7/22**, B60C 7/24

(21) Application number: 92306551.0

(22) Date of filing: 16.07.92

(54) Solid tyre

(30) Priority: 19.07.91 JP 204665/91
17.09.91 JP 267046/91

(43) Date of publication of application:
20.01.93 Bulletin 93/03

(45) Publication of the grant of the patent:
27.12.95 Bulletin 95/52

(84) Designated Contracting States:
DE FR GB

(56) References cited:
DE-A- 1 480 911      DE-A- 2 330 276
FR-A- 1 302 223      FR-A- 1 305 444
FR-A- 2 160 868      US-A- 2 525 196

(73) Proprietor: SUMITOMO RUBBER INDUSTRIES
LIMITED
1-1 Tsutsuicho 1-chome
Chuo-ku
Kobe-shi
Hyogo-ken (JP)

(72) Inventor: Ichikawa, Kouji
6-10 Kounancho 4-chome,
Higashinada ku
Kobe-shi,
Hyogo-ken (JP)

Inventor: Nishimura, Takashi
6-3-1-301 Izumidai,
Kita-ku
Kobe-shi,
Hyogo-ken (JP)
Inventor: Tanigawa, Motoshi
99 Tokura,
Shikama-ku
Himeji-shi,
Hyogo-ken (JP)
Inventor: Yamanaka, Shigeki
2-504 Matsugaoka 2-chome
Akashi-shi,
Hyogo-ken (JP)
Inventor: Muraoka, Kiyoshige
6-28 Shioyacho 1-chome,
Tarumi-ku
Kobe-shi,
Hyogo-ken (JP)
Inventor: Okada, Ryozo
11-1 Gotenyama 3-chome
Takarazuka-shi,
Hyogo-ken (JP)

(74) Representative: **Stewart, Charles Geoffrey**
**SP TYRES UK LIMITED**
**Technical Division**
**Fort Dunlop,**
**Erdington,**
**Birmingham B24 9QT (GB)**

## Description

The present invention relates to a solid tyre, more particularly a so-called pneumatic-shaped solid tyre in which resistance to rim slip is improved.

For industrial vehicles, e.g. forklift trucks, solid tyres are widely used.

A pneumatic-shaped solid tyre is one of such solid tyres. A pneumatic-shaped solid tyre has a similar profile to a usual pneumatic tyre and is mounted on the same shape rim which is originally for the same size pneumatic tyre.

For example, in each of Japanese patent publications JP-A-61044005 and JP-A-1083405, such a pneumatic-shaped solid tyre is disclosed, wherein a tyre main body is composed of three rubber layers, a radially innermost base rubber layer, a radially outermost tread rubber layer and an in-between cushion rubber layer.

The base rubber layer is made of a rubber compound reinforced by short organic fibre cords mixed therewith in order to greatly increase the compressive elastic modulus or rigidity, meant to improve the engaging force between the tyre and rim.

Further, the rigid base rubber layer extends over the radially outer edge of the rim flange, and a reinforcing cord layer is disposed at a higher position radially outwards of the above-mentioned outer edge of the rim flange.

Thus, a large engaging force is provided in the initial stage of the tyre life.

However, when the base rubber layer has aged, the friction between the base rubber layer and the rim is reduced, and the base rubber volume slightly decreases. Accordingly, the engaging force is decreased and as a result slippage occurs between the tyre and the rim.

Even if it is assumed that the reinforcing cord layer produces a hoop force, the force can not act at the rim because a rigid compressive resistant rubber layer exists therebetween.

Accordingly, such a reinforcing cord layer does not prevent rim slip.

Further, as the reinforcing cord layer is disposed near to or at the boundary between the rigid base rubber layer and the relatively soft in-between cushion rubber layer, separation failure of the cushion rubber sometimes occurs.

It is the object of the present invention to provide a pneumatic-shaped solid tyre, in which rim slip is effectively prevented without using, for the base rubber layer, a rigid rubber composition reinforced by short organic fibre cords or similar materials.

A pneumatic-shaped solid tyre comprising features according to the preamble of claim 1 is known for example from patent publication FR-A-1302223. This tyre has a base rubber layer of hardness 80-90 Shore A reinforced by a single band of two plies of cords laid at an angle of 5-15° with respect to the tyre circumferential direction.

According to the present invention, a pneumatic-shaped solid tyre comprises a main body comprising an annular base rubber layer to engage on a wheel rim and a radially outer annular rubber layer, the outside of which defines a tread surface, disposed radially outside the base rubber layer, the base rubber layer made of a rubber composition in which no short cordlike or fibrelike reinforcing materials are included, characterised by the base rubber layer having a JIS(A) hardness from 75 to 90, the thickness of the base rubber layer measured from the base line to the radially outer face thereof being 0.3 to 0.7 times the tyre section height, the base rubber layer provided therein with a radially inner band and a radially outer band, each of the bands comprising at least one ply of organic fibre cords laid at an angle from 0 to 15 degrees with respect to the tyre circumferential direction, the organic fibre cords in each band being heat-shrinkable cords, the radial heights of the outer and inner bands at the thickness centre line thereof being in the range of from 0.1 to 0.4 times the tyre section height, the radial distance between the thickness centrelines of the inner and outer bands being in the range of from 0.2 to 0.3 times the tyre section height, the radially outer band and the radially inner band being spaced apart from each other in the radial direction of the tyre so that only said rubber composition is disposed therebetween.

Embodiments of the present invention will now be described in detail in conjunction with the accompanying drawings, in which:

Fig.1 is a cross sectional view showing a right half of a solid tyre according to the present invention;
Fig.2 is a graph showing the tyre/rim engaging force as a function of the radial position of a single band;
Fig.3 is a graph showing the amount of rim slip as a function of the radial position of a single band;
Fig.4 is a graph showing the tyre/rim engaging force as a function of the ply number in a single band;
Fig.5 is a graph showing the amount of rim slip as a function of the ply number in a single band; and
Fig.6 is a graph showing the tyre/rim engaging force and the amount of rim slip as functions of the radial positions of two radially spaced bands.

3

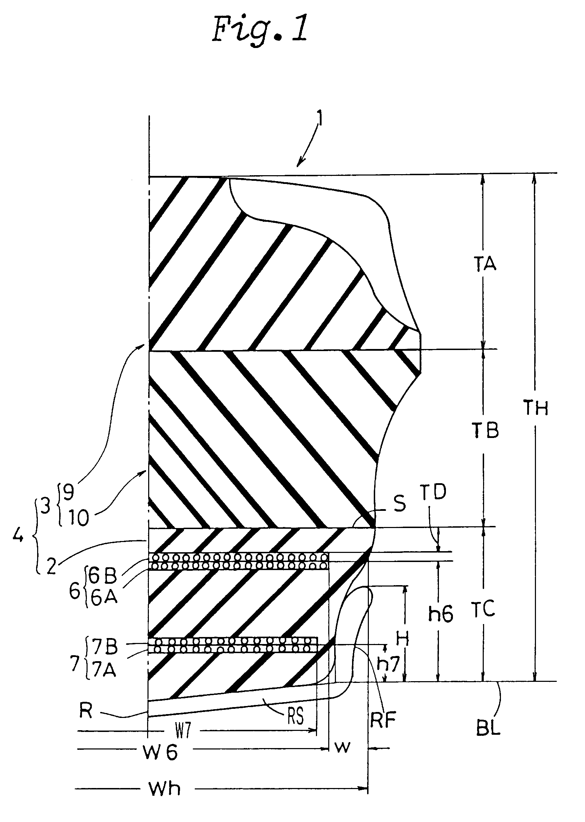

In Fig.1, a pneumatic-shaped solid tyre 1 has a main body 4 comprising an annular base rubber layer 2 and an annular tread rubber layer 3 disposed radially outside the base rubber layer 2. The tyre 1 is shown mounted on a rim R, which is designed originally for pneumatic tyres having the same size as the tyre 1. The tyre is mounted by positioning the base rubber layer 2 on the rim base RS between the rim flanges RF.

The base rubber layer 2 is made of a rubber composition having a JIS(A) hardness of 75 to 90, in which no reinforcing materials such as short fibres, short cords or the like are mixed.

The radial height TC of the base rubber layer 2 is in the range from 30 to 70 % of the tyre section height TH, and is larger than the radial height H of the flange RF of the rim R, where each height is measured from the base line BL which is the same as the corresponding bead base line of ordinary pneumatic tyres.

In this embodiment, the tread rubber layer 3 is composed of a cushion rubber part 10 which is a radially inner annular part disposed on and around the radial outside of the base rubber layer 2, and a tread rubber part 9 which is a radially outer annular part disposed on and around the radial outside of the cushion rubber part 10.

As the radially outer surface of the tread rubber part 9 forms the tread face, a rubber composition having a JIS(A) hardness of 60 to 75 and which is excellent in cut resistance and wear resistance is used for this tread rubber part 9.

If the hardness is less than 60, the cut resistance and wear resistance are not good.

If the hardness is more than 75, the grip performance of the tyre is deteriorated.

For the cushion rubber part 10, a soft rubber compound having a JIS(A) hardness of 40 to 65 is used. For example, natural rubber and butadiene rubber containing 30 to 50 PHR of carbon black are preferably used.

The thickness TB of the cushion rubber part 10 is preferably in the range from 25 to 50 % of the tyre section height TH.

By providing such a cushion part 10, ride comfort is improved.

However, the cushion rubber part 10 may be eliminated from under the tread rubber layer 3 whilst still utilising the present invention.

The above-mentioned base rubber layer 2 is provided therein with two radially spaced bands, a radially outer band 6 and a radially inner band 7.

The outer band 6 is composed of at least one ply, in this example two plies 6A and 6B, of parallel organic fibre cords.

The inner band 7 is composed of at least one ply, in this example two plies 7A and 7B, of parallel organic fibre cords.

The organic fibre cords in each ply 6A, 6B, 7A, 7B are laid at an angle of 0 to 15 degrees with respect to the tyre circumferential direction.

If the cord angle is more than 15 degrees, the hooping force is unfavourably decreased.

Preferably, the cord angles of the inner band 7 are in the range of 0 to 5 degrees, and in the outer band 6 the cord angles are larger than those of the inner band 7. Also preferably the adjacent plies are crossed with respect to the cords.

For the band cords, organic fibre cords, preferably heat-shrinkable cords, e.g. nylon, polyester or the like are used, and the band cords are embedded in a topping rubber whose 30% modulus is 40 to 150 kg/cm$^2$.

The outer and inner bands 6 and 7 are positioned such that the radial heights h6 and h7 of the ply centre lines thereof measured from the bead base line BL are in the range of 0.1 to 0.4 times the tyre section height TH.

$$0.4 \geqq h6/TH > h7/TH \geqq 0.1$$

Further, the radial height h6 of the outer band 6 is preferably more than 0.2 times the tyre section height TH.

$$0.4 \geqq h6/TH > 0.2$$

The space (h6-h7) between the inner and outer bands 6 and 7 is preferably in the range of 0.2 to 0.3 times the tyre section height TH.

$$0.3 \geqq (h6-h7) \geqq 0.2$$

4

The radial distance TD measured from the radially outer face S of the base rubber layer 2 to the outermost band 6 is not less than 3%, preferably 5 to 10% of the above-mentioned height TC of the base rubber layer 2, whereby separation between the base rubber layer and the tread rubber layer is prevented.

The width W6, W7 of each band 6, 7 is more than 70% and less than 100% of the width of the main body 4 measured at the position of the band. More preferably it is in the range of 75 to 85 %.

By maintaining a width (w) (about 10% width) on each side of the band, the strength of the main body 4 is retained.

Incidentally, in the case when the band is composed of a plurality of plies, the band can be formed by winding a plurality of strips one by one or by winding a long strip continuously a plurality of times.

Further, the band can be formed by spirally winding a long narrow strip or ribbon in which one to several organic fibre cords are embedded.

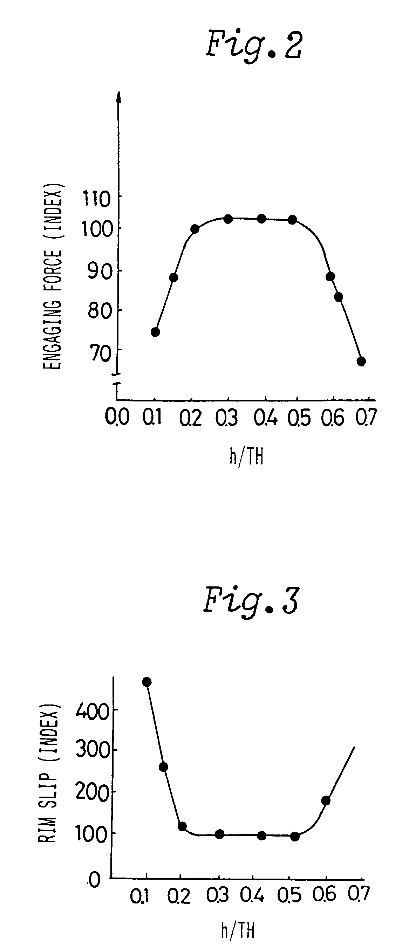

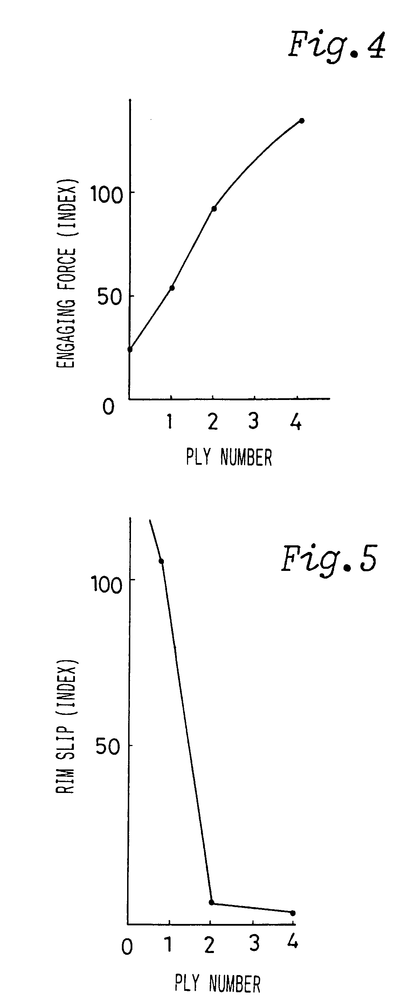

Figs.2-4 show the results of tests which were made to measure the tyre/rim engaging force and the amount of rim slip.

In the tests, a tyre main body composed of a base rubber layer and a tread rubber layer composed of a tread rubber part only was used.

The thickness (TC) of the base rubber layer was 50% of the tyre section height (TH), and accordingly the thickness of the tread rubber layer was also 50% of the tyre section height (TH).

In the tyre main body, one (1) band composed of at least one ply of 1500d polyester cords whose cord count was 38 cords /5cm was disposed.

Changing the radial height (h) of the band and the number of the band ply, the tyre/rim engaging force and the amount of slip were measured.

From the test results, the preferable ranges for a single band were as follows: the radial height of the band measured from the bead base line to the band thickness centre line is in the range of 20 to 60 % of the tyre section height, and the number of the band ply is in the range of 2 to 4.

Further, the smaller the band cord angle to the tyre circumferential direction, the larger the hooping force. In the case of the single band, 0 to 5 degrees is preferable.

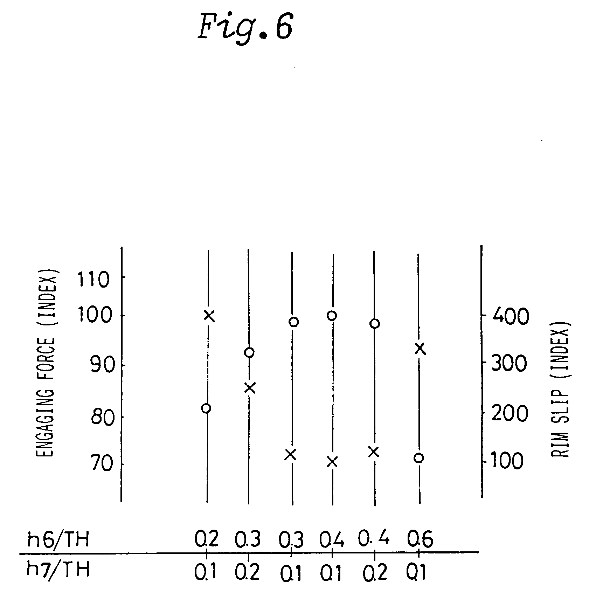

Fig.6 shows the results of similar tests made with respect to test tyres in which two radially spaced bands were disposed in the main body. In Fig.6, the engaging force is indicated by a circle and the amount of rim slip is indicated by "X".

Table 1 shows the results of similar tests made with respect to Example tyres 1-3 according to the invention and reference tyres 1-7.

The specifications thereof are also given in table 1.

The tyre size was 7.00-12, and the rim size was 5.00S.

For the band cords, polyester fibre cords were used.

For the base rubber layer of Reference tyre 4, a rubber reinforced by short fibre cords was used.

The engaging force was measured as the maximum force to fit the tyre to its rim by using an Amsler tester, a tyre compression tester.

The engaging force is indicated by an index based on the assumption that Example tyre is 100. The larger the index, the larger the engaging force.

Using a forklift truck fitted with the test tyre, the circumferential slippage of the tyre caused relative to the rim during running for 3 kilometres following a figure of 8 turn was measured as the amount of rim slip.

With respect to Example tyre 3 and Reference tyre 4, a durability test was conducted.

While a 2.5 ton forklift truck was going and returning back on a 50m test course, the time to start of slippage was measured as the durability.

The durability is indicated by an index based on the assumption that Reference tyre 4 is 100. The larger the index, the better the durability.

TABLE 1

| | | Ex.1 | Ex.2 | Ex.3 | Ref.1 | Ref.2 | Ref.3 | Ref.4 | Ref.5 | Ref.6 | Ref.7 |
|---|---|---|---|---|---|---|---|---|---|---|---|
| | TA/TH | 0.30 | 0.30 | 0.70 | 0.28 | 0.73 | 0.38 | 0.38 | 0.45 | 0.45 | 0.45 |
| | TB/TH | 0.40 | --- | --- | --- | --- | --- | --- | --- | --- | --- |
| | TC/TH | 0.30 | 0.70 | 0.30 | 0.72 | 0.27 | 0.62 | 0.62 | 0.55 | 0.55 | 0.55 |
| | h6/TH | 0.40 | 0.40 | 0.30 | 0.40 | 0.20 | 0.50 | non | 0.50 | 0.30 | 0.40 |
| | h7/TH | 0.10 | 0.20 | 0.10 | 0.30 | 0.10 | 0.10 | --- | 0.5 | 0.10 | 0.20 |
| | JIS(A) hardness of base rubber layer | 75 | 90 | 80 | 90 | 80 | 75 | 80 | 80 | 80 | 80 |
| | Band cord angle (deg) | 0 | 5 | 3 | 2 | 10 | 8 | --- | 5 | 7 | 5 |
| | Band ply number | 2 | 2 | 2 | 2 | 2 | 2 | 0 | 2 | 2 | 3 |
| | Engaging force (index) | 100 | 100 | 100 | 82 | 87 | 70 | 90 | 95 | 90 | 95 |
| | Rim slip (index) | 100 | 100 | 100 | 180 | 270 | 400 | 200 | 150 | 200 | 200 |
| | Durability (index) | --- | --- | 320 | --- | --- | --- | 100 | --- | --- | --- |

## Claims

1. A pneumatic-shaped solid tyre (1) comprising a main body (4) comprising an annular base rubber layer (2) to engage on a wheel rim (R) and a radially outer annular rubber layer (3), the outside of which defines a tread surface, disposed radially outside the base rubber layer (2), the base rubber layer (2) being made of a rubber composition in which no short cordlike or fibrelike reinforcing materials are included, characterised by the base rubber layer (2) having a JIS(A) hardness from 75 to 90, the thickness (TC) of the base rubber layer (2) measured from the base line (BL) to the radially outer face thereof being 0.3 to 0.7 times the tyre section height (TH), the base rubber layer (2) provided therein with a radially inner band (7) and a radially outer band (6), each of the bands (6 and 7) comprising at least one ply of organic fibre cords laid at an angle from 0 to 15 degrees with respect to the tyre circumferential direction, the organic fibre cords in each band (6 and 7) being heat-shrinkable cords, the radial heights (h6 and h7) of the outer and inner bands (6 and 7) at the thickness centre line thereof being in the range of from 0.1 to 0.4 times the tyre section height (TH), the radial distance (h6-h7) between the thickness centrelines of the inner and outer bands (6 and 7) being in the range of from 0.2 to 0.3 times the tyre section height (TH), the radially outer band (6) and the radially inner band (7) being spaced apart from each other in the radial direction of the tyre so that only said rubber composition is disposed therebetween.

2. A tyre according to claim 1, characterised in that the radial height (h6) of the outer band (6) is more than 0.2 times the tyre section height (TH).

3. A tyre according to claim 1 or 2, characterised in that the outer band (6) is radially inwardly spaced apart from the radially outer face (S) of the base rubber layer (2) by a distance (TD) of not less than 3% of the thickness (TC) of the base rubber layer (2).

4. A tyre according to claim 1, 2 or 3, characterised in that the radially outer annular rubber layer (3) comprises a radially outer part (9) having a JIS(A) hardness of 60 to 75 and a radially inner part (10) having a JIS(A) hardness of 40 to 65, and the thickness (TB) of said radially inner part (10) is in the range of from 25 to 50% of the tyre section height (TH).

**Patentansprüche**

1.  Ein pneumatisch geformter Vollreifen (1) mit einem Hauptkörper (4), der eine ringförmige Basisgummischicht (2) zum Eingriff auf einer Radfelge (R) und eine radial äußere ringförmige Gummischicht (3) umfaßt, wobei deren Außenseite eine Laufflächenoberfläche definiert, die radial außerhalb der Basisgummischicht (2) angeordnet ist, und die Basisgummischicht (2) aus einer Gummizusammensetzung gefertigt ist, in welcher keine kurzen cordartigen oder faserartigen Verstärkungsmaterialien eingeschlossen sind, dadurch gekennzeichnet, daß die Basisgummischicht (2) eine JIS(A)-Härte von 75 bis 90 aufweist, die Dicke (TC) der Basisgummischicht (2) gemessen von der Basislinie (BL) zu deren radial äußeren Fläche das 0,3- bis 0,7-fache der Reifenschnitthöhe (TH) beträgt und die Basisgummischicht (2) darin mit einem radial inneren Band (7) und einem radial äußeren Band (6) versehen ist, wobei jedes der Bänder (6 und 7) wenigstens eine Lage organische Fasercorde umfaßt, die unter einem Winkel von 0 bis 15 Grad bezüglich der Reifenumfangsrichtung gelegt sind, die organischen Fasercorde in jedem Band (6 und 7) wärmeschrumpfbare Corde sind, die radialen Höhen (h6 und h7) der äußeren und inneren Bänder (6 und 7) an deren Dickenmittellinie im Bereich des 0,1- bis 0,4-fachen der Reifenschnitthöhe (TH) liegen, der radiale Abstand (h6-h7) zwischen den Dickenmittellinien der inneren und äußeren Bänder (6 und 7) im Bereich des 0,2- bis 0,3-fachen der Reifenschnitthöhe (TH) liegt und das radial äußere Band (6) und das radial innere Band (7) voneinander in der radialen Richtung des Reifens so beabstandet sind, daß nur die Gummizusammensetzung dazwischen angeordnet ist.

2.  Ein Reifen nach Anspruch 1, dadurch gekennzeichnet, daß die radiale Höhe (h6) des äußeren Bandes (6) mehr als das 0,2-fache der Reifenschnitthöhe (TH) beträgt.

3.  Ein Reifen nach Anspruch 1 oder 2, dadurch gekennzeichnet, daß das äußere Band (6) radial nach innen mit einem Abstand (TD) von nicht weniger als 3 % der Dicke (TC) der Basisgummischicht (2) zur radial äußeren Fläche (S) der Basisgummischicht (2) angeordnet ist.

4.  Ein Reifen nach Anspruch 1, 2 oder 3, dadurch gekennzeichnet, daß die radial äußere ringförmige Gummischicht (3) ein radial äußeres Teil (9) mit einer JIS(A)-Härte von 60 bis 75 und ein radial inneres Teil (10) mit einer JIS(A)-Härte von 40 bis 65 umfaßt, und daß die Dicke (TB) des radial inneren Teils (10) im Bereich von 25 bis 50 % der Reifenschnitthöhe (TH) liegt.

**Revendications**

1.  Bandage plein (1) en forme de pneumatique, comprenant un corps principal (4) ayant une couche annulaire (2) de caoutchouc de base destinée à coopérer avec une jante (R) de roue et une couche annulaire radialement externe (3) de caoutchouc, dont l'extérieur délimite une surface de bande de roulement, disposée radialement à l'extérieur de la couche (2) de caoutchouc de base, la couche (2) de caoutchouc de base étant formée d'une composition de caoutchouc dans laquelle aucun matériau d'armature analogue à des fibres ou à des câblés courts n'est incorporé, caractérisé en ce que le caoutchouc de la couche de base (2) a une dureté JIS(A) comprise entre 75 et 90, l'épaisseur (TC) de la couche (2) de caoutchouc de base mesurée depuis l'axe de référence (BL) jusqu'à la face radialement externe est comprise entre 0,3 et 0,7 fois la hauteur en coupe (TH) du bandage, la couche (2) de caoutchouc de base a à l'intérieur une bande radialement interne (7) et une bande radialement externe (6), chacune des bandes (6 et 7) comprenant au moins une nappe de câblés de fibres organiques faisant un angle compris entre 0 et 15° avec la direction circonférentielle du bandage, les câblés de fibres organiques de chaque bande (6 et 7) étant des câblés thermorétractables, les hauteurs radiales (h6 et h7) des bandes externe et interne (6 et 7) à l'axe central suivant l'épaisseur étant comprises entre 0,1 et 0,4 fois la hauteur en coupe (TH) du bandage, la distance radiale (h6 - h7) comprise entre les axes centraux des épaisseurs des bandes interne et externe (6 et 7) étant comprise entre 0,2 et 0,3 fois la hauteur en coupe (TH) du bandage, et la bande radialement externe (6) et la bande radialement interne (7) sont séparées l'une de l'autre dans la direction radiale du bandage de manière que seule ladite composition de caoutchouc soit disposée entre elles.

2.  Bandage selon la revendication 1, caractérisé en ce que la hauteur radiale (h6) de la bande externe (6) dépasse 0,2 fois la hauteur en coupe (TH) du bandage.

3. Bandage selon la revendication 1 ou 2, caractérisé en ce que la bande externe (6) est placée à distance radiale vers l'intérieur de la face radialement externe (S) de la couche (2) de caoutchouc de base à une distance (TD) qui n'est pas inférieure à 3 % de l'épaisseur (TC) de la couche (2) de caoutchouc de base.

4. Bandage selon la revendication 1, 2 ou 3, caractérisé en ce que la couche annulaire radialement externe (3) de caoutchouc forme une partie radialement externe (9) ayant une dureté JIS (A) comprise entre 60 et 75 et une partie radialement interne (10) ayant une dureté JIS(A) comprise entre 40 et 65, et l'épaisseur (TB) de la partie radialement interne (10) est comprise entre 25 et 50 % de la hauteur en coupe (TH) du bandage.

# Fig.1

## Fig.2

## Fig.3

*Fig.4*

*Fig.5*

# Fig.6